# FASCICULE DE BREVET EUROPEEN

(11) **EP 2 232 298 B1**
(45) Date de publication et mention de la délivrance du brevet: **21.11.2018**
(21) Numéro de dépôt: 08865648.3
(22) Date de dépôt: 16.12.2008
(51) Int. Cl.: G01S 13/04, G01S 13/56, G08B 13/187, G08B 21/22, G01S 13/87

(54) **INSTALLATION DE DÉTECTION DE PERSONNES DANS UN ESPACE DÉLIMITÉ**
AUSRÜSTUNG ZUR ERFASSUNG VON PERSONEN IN EINEM ABGEGRENZTEN RAUM
EQUIPMENT FOR DETECTING PERSONS IN A DEFINED SPACE

(30) Priorité: 20.12.2007 FR 0760143
(43) Date de publication de la demande: 29.09.2010
(73) Titulaire: Office National d'Etudes et de Recherches Aérospatiales, 91120 Palaiseau (FR)
(72) Inventeur: DREUILLET, Philippe, F-91640 Fontenay Les Briis (FR); BOBILLOT, Gérard, F-78530 Buc (FR); VIGNAUD, Luc, F-75011 Paris (FR); TARDIVEL, François, F-92340 Bourg La Reine (FR); PAUN, Florin, F-92130 Issy Les Moulineaux (FR)
(74) Mandataire: Novagraaf Technologies
(86) Numéro de dépôt international: PCT/FR2008/052309
(87) Numéro de publication internationale: WO 2009/081018

(56) Documents cités:
- WO-A-93/19385
- WO-A-03/054333
- DE-A1- 19 926 845
- US-A- 4 087 814
- US-A- 4 527 151
- US-A- 5 491 467
- US-A- 5 905 436
- US-A1- 2005 154 503

## Description

La présente invention concerne une installation de détection de la position d'une entité, mobile ou immobile, dans un espace délimité, désignant, de manière générale, une surface ou un volume déterminé.

Plus particulièrement, l'installation objet de la présente invention est destinée à la détection de la position de personne, de partie du corps d'une personne ou encore d'objet, dans un espace délimité.

Parmi de nombreuses applications où la détection de personne dans un espace délimité présente un intérêt certain, on peut citer de manière non limitative, le domaine de la surveillance de personnes âgées à domicile, avec l'identification de situations d'urgence en découlant, le domaine de la détection d'intrusion dans un local, ou encore celui de la localisation et du suivi de la trajectoire de personnes dans des locaux.

Généralement, ces applications se basent sur une détection du mouvement de la personne et sur une reconnaissance des activités de cette personne dans le local délimité.

Ainsi, dans le cadre d'une application spécifique à la surveillance à distance d'une personne âgée et/ou malade, le brevet américain US-5905436 décrit un système de surveillance doté d'un processeur programmable connecté à une pluralité de capteurs de mouvement à infrarouges.

Ce dispositif est prévu pour détecter les activités de la personne dans un ou plusieurs locaux délimités spécifiques tels que chambre à coucher, salle de bain, salon etc. Ce dispositif stocke des signaux relatifs à ces activités détectées dans une table et identifie des événements d'urgence tels qu'une chute de la personne, afin de déclencher une alarme sur une unité d'affichage pour prévenir un personnel compétent de ces événements.

Les capteurs sont disposés selon des localisations stratégiques de manière à couvrir la quasi-totalité de chaque espace délimité. En particulier, le système décrit dans le brevet précité prévoit au moins une paire de capteurs située dans la partie supérieure d'un plan vertical délimitant le local, au moins une autre paire de capteurs située dans la partie inférieure de ce plan vertical et préférentiellement au moins un autre capteur situé sur une porte dans l'espace à surveiller.

Ces capteurs communiquent avec le processeur pour déterminer les activités de la personne surveillée. En particulier, lorsque le capteur de porte détecte un mouvement de la porte, les deux paires de capteurs situées dans les parties respectivement inférieure et supérieure du plan vertical vont détecter le mouvement de la personne dans le local.

La situation selon laquelle un mouvement de la personne est détecté dans la partie inférieure du local surveillé alors qu'en même temps, une absence de mouvement est détectée dans la partie supérieure, permet de déclencher une alarme pour prévenir de la chute de la personne.

Cependant, ce dispositif détecte simplement la présence et/ou l'absence de mouvement de la personne surveillée, ce qui est insuffisant, notamment pour détecter une personne immobile, soit volontairement pour échapper à une détection (dans le cas d'une intrusion), soit involontairement suite à une perte de conscience, à un malaise ou tout événement immobilisant la personne au sol.

De plus, ce dispositif est inadapté à diagnostiquer des situations de fausses alarmes, consécutives notamment à des défauts de fonctionnement du dispositif. Typiquement, si le capteur surveillant la partie supérieure du local est défectueux ou en panne, un mouvement sera détecté dans la seule partie inférieure en dépit de la présence d'une personne debout normalement en mouvement dans le local. Cette situation conduit ainsi à générer une fausse alarme, puisqu'en réalité aucune chute ne s'est produite. Or, le traitement et l'élimination des fausses alarmes est un enjeu majeur pour rendre véritablement efficace la surveillance à distance des personnes âgées et/ou malades.

De plus, la mise en oeuvre d'un tel dispositif est relativement complexe, car elle nécessite une bonne connaissance et une identification des activités de la personne dans chaque pièce pour être appliquée à l'ensemble du domicile de cette personne.

Le document WO-03054333 divulgue un dispositif de contrôle d'ouverture et de fermeture d'une porte comprenant une caméra, un émetteur-récepteur micro-onde, et un émetteur-récepteur infra-rouge ainsi qu'une unité de contrôle.

Le document US-5491467 divulgue un dispositif de détection d'intrusion comprenant un dispositif micro-onde, un dispositif infra-rouge ainsi qu'un procédé de mise en oeuvre comprenant une étape de mesure par les deux dispositifs ainsi qu'une étape d'addition des deux signaux par une porte logique « AND » et une étape d'émission d'un signal d'alarme.

Le document WO-9319385 divulgue un dispositif de surveillance d'un espace comprenant au moins un émetteur et au moins un récepteur et un ensemble d'analyse des données recueillies.

Le document DE-19926845 divulgue un dispositif de sécurité d'une personne dans un véhicule permettant une réaction en cas de choc, ledit dispositif de sécurité comprenant plusieurs zones de détection (A, B, C, D) divisant l'intérieur du véhicule et plusieurs capteurs qui ne sont pas associés bijectivement à chaque zone.

Le but de l'invention est donc de remédier à au moins un de ces inconvénients en proposant un système de détection dont la mise en oeuvre est simple, donc facilement intégrable dans tout local délimité.

L'invention concerne donc à cet effet une installation de détection de la position d'une entité, mobile ou immobile, dans un espace délimité, selon la revendication 1.

Avantageusement, les moyens de comparaison sont adaptés à réaliser une opération de soustraction entre l'amplitude, ou la phase, ou l'amplitude et la phase desdits échos.

Avantageusement, lesdits plans sensiblement horizontaux sont disposés respectivement à environ 0,8 m et 1,5 m du sol dudit espace.

L'invention concerne également une application d'une installation de détection selon le premier mode de réalisation à l'identification de situation d'urgence dans un local formant ledit espace pour le suivi de personne à domicile.

L'invention concerne aussi un procédé de détection d'une entité mobile ou immobile dans un espace délimité, selon la revendication 5.

Avantageusement, l'étape de comparaison entre l'écho instantané et l'écho de référence s'effectue par une soustraction entre l'amplitude, ou la phase, ou l'amplitude et la phase desdits échos.

Selon un mode de réalisation, la mesure de l'écho de référence représentatif des signaux réfléchis dans ladite zone en l'absence de ladite entité, est réalisée lorsque l'espace est vide.

Selon une variante, la mesure de l'écho de référence représentatif des signaux réfléchis dans ladite zone en l'absence de ladite entité, résulte d'un traitement appliqué à une pluralité d'échos instantanés collectés en présence de ladite entité mobile dans ledit espace.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 est une représentation schématique d'une installation de détection selon l'invention ;
- la figure 2 est une représentation schématique d'un exemple de réalisation d'un dispositif d'émission/réception compris dans l'installation de l'invention ;
- la figure 3 est une illustration schématique d'une première application spécifique de l'installation selon l'invention à la localisation de personnes mobiles et/ou immobiles au sol et à l'identification de situations d'urgence ;
- la figure 4 est un organigramme illustrant les principales étapes de traitement effectuées par des moyens de détection de l'installation selon l'invention, en chaque zone d'observation, dans le cadre de cette première application ;
- la figure 5 est un organigramme illustrant les étapes de traitement effectuées sur les informations recueillies par les moyens de détection pour chacune des zones d'observation, dans le cadre de la première application ;
- la figure 6 est une illustration schématique d'une deuxième application spécifique d'une autre installation ne faisant pas partie de l'invention à la gestion de dispositifs de sécurité dans un habitacle d'un véhicule automobile ;
- la figure 7 est un organigramme illustrant les principales étapes de traitement effectuées par des moyens de détection de l'installation en chaque zone d'observation, dans le cadre de cette deuxième application ;
- la figure 8 est un organigramme illustrant les étapes de traitement effectuées sur les informations recueillies par les moyens de détection pour chacune des zones d'observation, dans le cadre de cette deuxième application ;
- la figure 9 est une illustration schématique d'une troisième application spécifique d'une autre installation ne faisant pas partie de l'invention à la localisation et trajectographie de personnes dans un espace délimité, présenté en vue de dessus sur la figure.

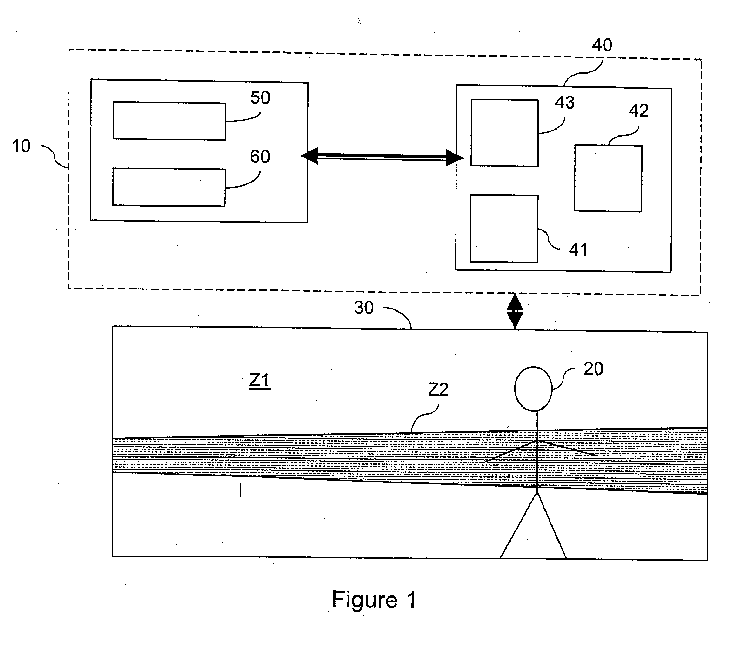

Une installation de détection 10 d'une entité 20, en l'occurrence une personne, dans un local délimité 30 est décrite en référence à la figure 1.

Une telle installation comprend des moyens de détection 40 de présence de la personne dans au moins deux zones d'observation du local, respectivement Z1 et Z2, qui sont choisies de manière à se recouvrir au moins partiellement. Dans l'exemple de la figure 1, la zone d'observation Z1 est constitué par le volume entier du local et la zone d'observation Z2 par une « tranche » de ce volume, délimitée par deux plans sensiblement horizontaux. Le choix des zones d'observation de la figure 1 est donné à simple titre illustratif et dépend en réalité, comme on le verra plus en détail par la suite à l'appui d'exemples spécifiques, du type d'application auquel est destiné l'installation de détection. Cependant, une caractéristique commune partagée par l'installation de détection selon l'invention, quelle que soit l'application à laquelle elle est destinée, repose sur l'utilisation d'au moins deux zones d'observation partiellement recouvrantes (ou non disjointes).

Par des moyens de détection de présence, on entend des moyens adaptés à détecter aussi bien une entité en mouvement qu'immobile. On reviendra plus en détail par la suite sur la constitution de tels moyens.

Les informations recueillies par les moyens de détection de présence pour chacune des zones d'observation considérées du local, à savoir des informations de présence et/ou des informations de mouvement de la personne en chacune de ces zones, sont alors fournies à des moyens de traitement 50, adaptés pour réaliser des opérations logiques sur ces informations et sur lesquelles on reviendra également plus en détail par la suite en référence aux exemples spécifiques fournis.

L'installation selon l'invention comprend en outre des moyens de décision 60, reliés aux moyens de traitement 50, qui, en fonction du signal logique produit par ces derniers, vont permettre de commander une action spécifique préétablie, comme déclencher une alarme par exemple.

Un des éléments essentiels de l'installation de détection selon l'invention est donc l'utilisation de zones d'observation non disjointes, associée à l'utilisation de moyens de détection de présence en chacune d'elles, aptes à détecter une personne, même immobile au sein de chaque zone. C'est alors la concordance, déterminée par les moyens de traitement, entre les informations de présence, combinées éventuellement à des informations de mouvement, recueillies pour chacune des zones d'observation non disjointes, avec celles d'une table logique, préétablie en fonction de l'application visée, qui permet de déclencher une action spécifique.

Pour rentrer maintenant plus en détail dans l'invention, les moyens de détection de présence 40 sont préférentiellement basés sur une utilisation du rayonnement directif ou sectoriel d'onde, ainsi que sur la réflexion d'ondes sur la personne, les objets et les murs des locaux, pour établir la présence et la localisation de personne, ou partie de personne, ou objet, même immobiles dans un local.

Différents types d'onde peuvent être utilisés à cet effet, pour autant qu'il s'agisse d'ondes capables de se propager, d'être réfléchies, et qu'on puisse en mesurer l'amplitude ou la phase. Les moyens de détection peuvent par exemple être basés sur l'utilisation d'ondes électromagnétiques, par exemple de type radioélectrique, infrarouge ou optique, ou encore sur l'utilisation d'ondes acoustiques.

Un mode de réalisation des moyens de détection va plus particulièrement être décrit en référence à l'utilisation d'ondes électromagnétiques radiofréquence.

Ainsi, selon ce mode de réalisation, les moyens de détection 40 comprennent un dispositif 41 d'émission/réception de signaux radiofréquence, propre à chaque zone d'observation retenue, utilisant le principe de rayonnement et de réflexion d'ondes électromagnétiques radiofréquence sur différents objets éventuellement présents dans la zone d'observation associée, ainsi que sur une personne présente dans cette zone.

Un dispositif d'émission/réception de signaux 41 est conçu à partir de divers composants radiofréquences disponibles dans le commerce pour diverses applications de télécommunication à courte portée et, en particulier, les applications industrielles scientifiques et médicales et/ou à courte distance dites ISM/SRD (pour Industrial Scientific Medical/Short Range Devices).

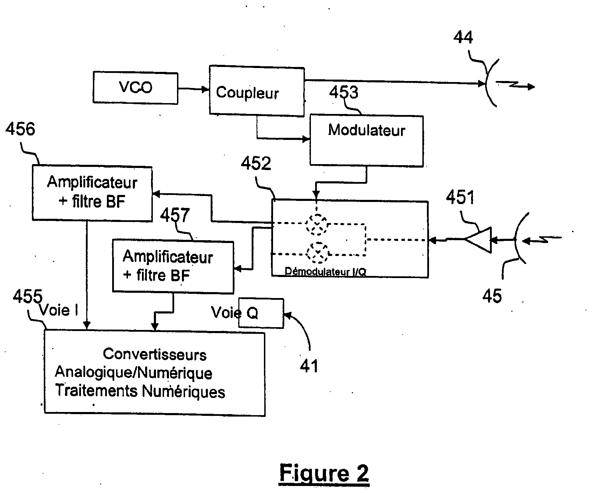

Le dispositif d'émission/réception de signaux 41 est classiquement basé sur une structure homodyne connue en soi. Un exemple des composants radiofréquences présent dans un tel circuit homodyne est donné en référence à la figure 2.

Il est bien entendu que d'autres types de structures du dispositif d'émission /réception 41 peuvent être utilisées sans sortir du cadre de l'invention.

Le dispositif d'émission/réception de signaux 41 de la figure 2 est composé notamment d'un ou de plusieurs éléments d'émission 44 aptes à émettre des signaux dans la zone d'observation associée et d'un ou plusieurs éléments de réception 45 aptes à collecter des signaux réfléchis en provenance de cette zone d'observation.

L'élément d'émission 44 du dispositif 41 est constitué d'un ou de plusieurs systèmes antennaires rayonnant successivement ou en même temps dans la zone d'observation associée et pouvant être placés selon des localisations prédéfinies dans la zone d'observation. Ces systèmes antennaires peuvent par exemple être constitués de câbles coaxiaux rayonnant, ou à fente ou d'antenne filaire.

L'élément de réception 45 du dispositif 41 peut être constitué par un ou plusieurs capteurs radiofréquence répartis dans la zone d'observation associée et collectant les signaux qui sont réfléchis en provenance de cette zone.

L'écho collecté est transmis par l'intermédiaire d'un amplificateur 451 à fort gain et à faible bruit à un circuit de démodulation 452 pour l'extraction d'une modulation issue du modulateur 453 de l'onde porteuse et récupérer en sortie les composantes I et Q orthogonales du signal, qui sont transmises chacune à un convertisseur analogique/numérique 455, par l'intermédiaire d'un bloc d'amplification et de filtrage basse fréquence, respectivement 456 et 457.

Un convertisseur analogique/numérique 455 est alors à même de convertir les signaux analogiques collectés en données numériques, afin d'effectuer des traitements numériques sur ces données. En particulier, ces traitements ont pour objectif de mesurer, soit des variations d'amplitude, soit des variations de phase, soit des variations d'amplitude et de phase, induites par la présence, même immobile, de la personne dans le faisceau des antennes.

Pour déterminer cette variation, les moyens de détection 40 comprennent des moyens de stockage 42 adaptés pour mémoriser un écho de référence pour chaque zone d'observation considérée, qui est mesuré par exemple lors d'une phase d'initialisation de l'installation et éventuellement mis à jour de manière périodique, lequel écho de référence étant représentatif des signaux réfléchis en provenance de la zone considérée en l'absence de la personne.

En effet, le principe de détection de présence repose sur une variation de l'écho collecté à un instant t pour la zone d'observation considérée, appelé par la suite écho instantané, par rapport à celui réfléchi par ladite zone en l'absence de la personne, dit écho de référence.

La mise à jour périodique de cet écho de référence permet en outre de prendre en compte, à échéance régulière, des modifications éventuelles de cet écho apportées par des modifications physiques du contenu de la zone d'observation concernée, liées par exemple à tout apport, suppression ou déplacement de meubles dans la zone en question.

La mesure des échos de référence pour chaque zone d'observation pourra être réalisée de plusieurs manières, selon l'une ou toute combinaison des méthodes décrites ci-après.

Selon un premier mode de réalisation, le dispositif de détection mesure pour une zone d'observation considérée, l'amplitude, ou la phase, ou bien l'amplitude et la phase du signal réfléchi par ladite zone, soit à la mise en route de l'installation dans un local réputé vide, soit chaque fois que des informations extérieures au dispositif lui indiquent que le local est vide. L'écho de référence ainsi obtenu pour chaque zone d'observation est mémorisé dans les moyens de stockage du dispositif prévus à cet effet.

Selon un autre mode de réalisation, la mesure de l'écho de référence pour une zone d'observation donnée, représentatif des signaux réfléchis dans ladite zone en l'absence de la personne, résulte d'un traitement appliqué à une pluralité d'échos instantanés collectés en présence de la personne mobile dans le local.

Plus précisément, dans le cas de dispositifs aptes à mesurer exclusivement l'amplitude du signal réfléchi, une méthode consiste à estimer l'écho de référence par des séquences successives de mesure du signal reçu en présence de la personne mobile dans le local (écho instantané) et par calcul de la valeur moyenne de l'amplitude de ces signaux, cette valeur moyenne étant alors prise comme valeur de référence.

Une variante adaptée au cas des dispositif de détection aptes à mesurer l'amplitude et la phase du signal réfléchi, consiste à estimer l'écho de référence par des séquences successives de mesure du signal reçu en présence de la personne mobile dans le local (écho instantané) par calcul de la valeur moyenne du signal complexe mesuré lors de phases de rapides et fortes variations du signal correspondant à des déplacements de la personne dans la pièce.

Ces deux méthodes reposent sur le fait que les déplacements de la personne dans le local permettent de séparer la part du signal à Doppler nul apporté par la réflexion du local de la part à Doppler non nul apporté par le déplacement de la personne dans le local.

Après mesure de l'écho de référence pour une zone d'observation donnée et mesure de l'écho instantané pour cette même zone, les moyens de détection sont aptes à traiter ces données recueillies par chaque paire d'antenne 44/45 associée à chaque zone d'observation. Les moyens de détection comprennent pour ce faire des moyens de comparaison 43 de l'écho instantané et de l'écho de référence collectés pour chaque zone d'observation, permettant de produire en sortie une information de présence et/ou, selon les cas, une information de mouvement de la personne en chacune des zones d'observation considérées du local. Ces moyens de comparaison sont typiquement implémentés par un calculateur, dont les principales étapes de traitement seront décrites plus en détail par la suite en référence aux exemples d'application fournis.

L'invention va maintenant être décrite dans le cadre d'une application spécifique relative à la détection de situations d'urgence, caractérisées par une chute, un malaise ou une perte de conscience immobilisant une personne seule au sol dans un local.

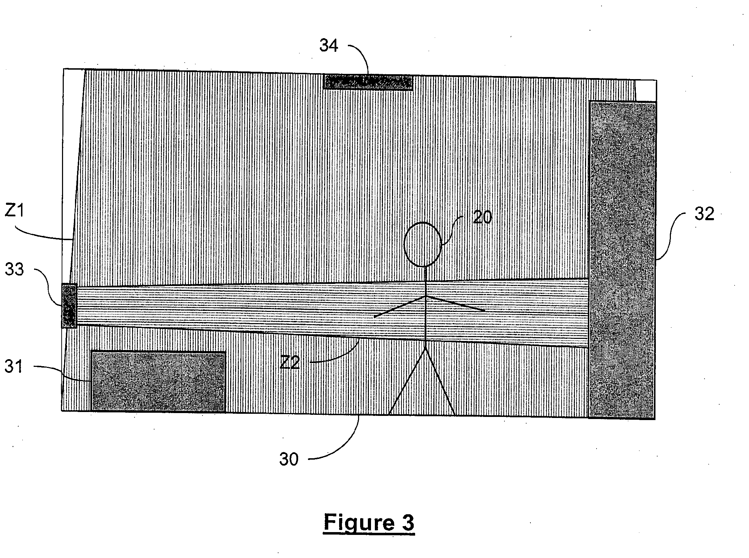

La figure 3 illustre à titre d'exemple un environnement de la personne 20 à surveiller comportant un espace délimité 30, constitué par un local, équipé de l'installation de détection de l'invention telle qu'elle vient d'être décrite, et dans lequel sont présents des objets 31 et 32, constitués par exemple par du mobilier (meubles, luminaires ou autres).

Une première zone d'observation Z1 (zone 1) illustrée à la figure 3 est définie sensiblement par l'ensemble du local.

Un dispositif d'émission/réception est donc associé à cette première zone d'observation Z1 avec pour but d'observer l'ensemble du local et de permettre de réaliser la détection de présence d'une personne dans l'ensemble du local. On utilise pour ce faire une première paire d'antennes 34, en tant qu'éléments d'émission et de réception, présentant avantageusement un diagramme de rayonnement très large (au moins 90° d'ouverture dans chaque plan). Elles pourront par exemple être constituées d'antennes de type dipolaire dans le cas d'utilisation d'ondes radiofréquence. Elles pourront être disposées, soit au plafond du local, en visant vers le bas tout le local (au moins 120° d'ouverture dans chaque plan), comme illustré dans l'exemple de la figure 3 soit, selon une variante, à proximité d'une liaison mur/plafond (au moins 90° d'ouverture dans chaque plan).

Une seconde zone d'observation Z2 (zone 2), recouvrant partiellement la première zone d'observation Z1, est définie par un volume du local, délimité par les murs de celui-ci et situé entre deux plans horizontaux, de préférence placés respectivement à environ 0,8 m et 1,5 m par rapport au sol du local.

Un dispositif d'émission/réception est donc associé à cette seconde zone d'observation Z2 avec pour but d'observer cette zone en particulier et de permettre de réaliser la détection de présence d'une personne dans celle-ci. On utilise pour ce faire une deuxième paire d'antennes 33, en tant qu'éléments d'émission et de réception, présentant avantageusement un diagramme de rayonnement large (de 90° à 180° d'ouverture dans un plan perpendiculaire à l'axe des antennes). Cette paire d'antenne, associée à la zone d'observation Z2, pourra par exemple être constituée, soit par une paire de câbles coaxiaux à fente, soit d'une paire d'antenne à fente. Elle pourra être disposée, soit au milieu d'un des murs du local, soit dans un angle de la pièce. Dans les deux cas, ces antennes seront placées de préférence à une hauteur moyenne d'environ 1,20 m.

Dans cette application particulière, la mesure de l'écho de référence en chaque zone Z1 et Z2 sera réalisée tout d'abord à la mise en route du dispositif, lors d'une phase d'initialisation déclenchée par l'installateur. Ensuite, la mesure des échos de référence sera réalisée pour mise à jour, selon les principes déjà exposés précédemment.

Chaque dispositif d'émission/réception est prévu pour mesurer, à intervalles réguliers, par exemple toutes les 30 secondes ou toutes les minutes, l'amplitude, ou la phase, ou bien l'amplitude et la phase du signal réfléchi en provenance de la zone d'observation associée, formant ainsi l'écho instantané.

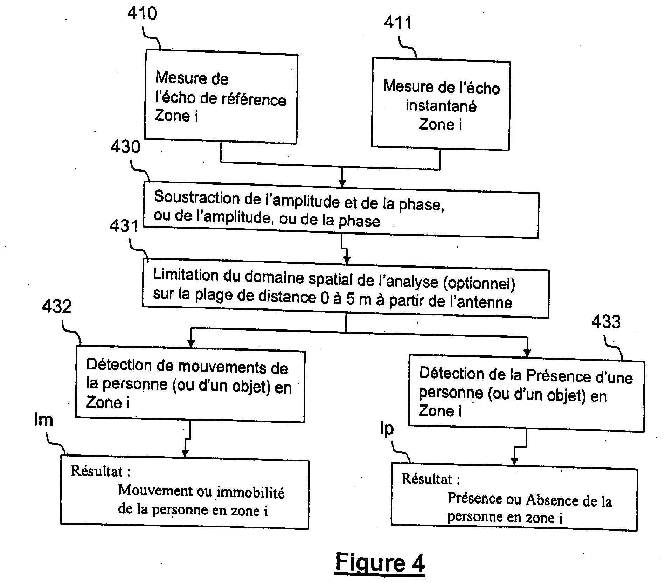

La figure 4 illustre alors les principales étapes de traitement effectuées par le calculateur sur les données recueillies par chaque dispositif d'émission/réception associé à chaque zone d'observation i.

Ainsi, disposant d'une mesure 410 de l'écho de référence pour la zone i et d'une mesure 411 d'un écho instantané pour cette zone i, on procède à une étape 430 de traitement consistant à comparer ces échos pour la zone i considérée. Cette comparaison entre l'écho de référence et l'écho instantané peut consister à réaliser une opération de soustraction entre l'amplitude, ou la phase, ou l'amplitude et la phase desdits échos, selon le type de mesure effectué pour obtenir les échos.

Une étape 431 de limitation du domaine spatial d'analyse est éventuellement mise en oeuvre sur la plage de distance comprise entre 0 et 5 m à partir de l'antenne, la distance maximale de détection étant portée dans cette application particulière à environ 5 m.

Une étape 433 d'analyse de l'écho soustrait issu de la comparaison entre l'écho de référence et l'écho instantané permet d'obtenir une information sur la présence ou la non présence (absence) d'une personne dans la zone i considérée. En effet, la présence d'une personne mobile ou immobile dans la zone d'observation i considérée modifie l'écho soustrait, ce qui permet de déclencher une détection, pour fournir en sortie l'information Ip de présence de la personne dans la zone i considérée.

Une étape 432 d'analyse de l'écho soustrait peut en outre être mise en oeuvre afin d'obtenir une information sur le mouvement ou l'absence de mouvement (immobilité) de la personne dans la zone i considérée. En effet, la présence d'une modulation de phase ou d'amplitude de l'écho soustrait à des fréquences de quelques Hertz permet de détecter l'existence de mouvement de la personne présente dans la zone i considérée (par application de l'effet Doppler). On obtient ainsi en sortie l'information Im de mouvement de la personne dans la zone i considérée.

Le traitement tel qu'il vient d'être décrit sur les données recueillies par chaque dispositif d'émission/réception associé à chaque zone d'observation, permet donc de détecter à la fois la présence ou l'absence d'une entité et le mouvement éventuel de cette entité dans chacune des zones. On peut en outre envisager la possibilité de déterminer un seuil minimal de fréquence Doppler en dessous duquel on considérera qu'une personne détectée ne bouge plus suffisamment pour être considérée comme consciente, déclenchant éventuellement une pré-alerte après un temps de latence de quelques minutes.

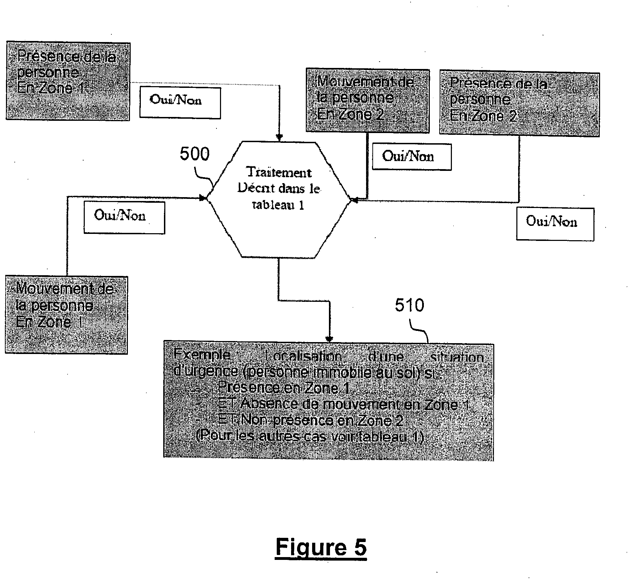

Les informations de présence et de mouvement recueillies en chacune des zones d'observations Z1 et Z2 sont alors soumises aux moyens de traitement 50 pour être fusionnées par l'intermédiaire d'opérations logiques réalisées sur elles. La figure 5 illustre à cet effet un traitement 500 effectué par les moyens de traitement sur les informations de présence et de mouvement de la personne en chacune des deux zones d'observation Z1 et Z2, en vue de déterminer une action à entreprendre en fonction du résultat de l'exécution des opérations logiques.

A titre d'exemple, une étape d'analyse 510 de la fusion de l'ensemble des informations recueillies pour chacune des zones d'observation, peut conduire à identifier une situation d'urgence si le signal résultant de la fusion des informations de présence et de mouvement répond à la règle suivante :
- Présence en zone 1
- ET Absence de mouvement en en zone 1
- ET Non présence en zone 2

Un tel résultat signifie en effet que la personne est immobile au sol, entraînant alors la commande par les moyens de décision d'une action spécifique pouvant consister par exemple à déclencher une alerte vers un centre de secours distant.

Le tableau 1 ci-après énumère l'ensemble des situations pouvant être identifiées par la fusion des informations de présence et de mouvement issues des deux zones d'observation Z1 et Z2.

Ce tableau, se présentant sous la forme d'une table de vérité, comprend une première sortie relative à des conclusions émises en fonction de chacune des combinaisons des valeurs possibles des opérandes que sont en l'occurrence les information de présence et de mouvement recueillies respectivement dans les zones d'observation Z1 et Z2 du local. Une seconde sortie détermine des actions pouvant être entreprises, associées à ces conclusions.

Les états binaires 0 et 1 représentent la non-détection et la détection respectivement.

| Cas n° (code binaire) | Z1 Présence | Z1 mouvement | Z2 Présence | Z2 Mouvement | Conclusion | Action |
|---|---|---|---|---|---|---|
| 0 (0000) | Non | Non | Non | Non | Aucune personne n'est présente dans la pièce | Possibilité de mesurer les échos de référence des zones Z1 et Z2 |
| 1 (0001) | Non | Non | Non | Oui | Dysfonction nement des moyens de détection en zone Z1. La personne est en mouvement en zone Z2, elle est donc debout ou assise | Transmettre l'information de panne des moyens de détection en zone Z1 |
| 2 (0010) | Non | Non | Oui | Non | Dysfonction nement des moyens de détection en zone Z1. La personne est présente et immobile en zone Z2, elle est donc debout ou assise | Transmettre l'information de panne des moyens de détection en zone Z1 |
| 3 (0011) | Non | Non | Oui | Oui | Dysfonction nement des moyens de détection en zone Z1. La personne est présente et en mouvement en zone Z2, elle est donc debout ou assise | Transmettre l'information de panne des moyens de détection en zone Z1 |
| 4 (0100) | Non | Oui | Non | Non | La personne est détectée en mouvement en zone Z1 mais non présente en zone Z2. La personne est donc allongée ou baissée. Elle est en mouvement. | Enregistrement éventuel de la date et heure du début de cette situation. Augmentation éventuelle de la fréquence d'observation. |
| 5 (0101) | Non | Oui | Non | Oui | La personne est détectée en mouvement en zones Z1 et Z2 | Néant |
| 6 (0110) | Non | Oui | Oui | Non | La personne est détectée en mouvement en zone Z1 et présente en zone Z2 sans mouvement. Elle est debout ou assise, bouge les jambes mais pas le haut du corps | Néant |
| 7 (0111) | Non | Oui | Oui | Oui | La personne est détectée en mouvement en zones Z1 et Z2 | Néant |
| 8 (1000) | Oui | Non | Non | Non | La personne est présente, allongée au sol et immobile. **Identificat ion d'une situation d'urgence** | Déclenchement de pré-alerte au bout de x mn. |
| 9 (1001) | Oui | Non | Non | Oui | La personne est détectée présente en zone Z1 et en mouvement en zone Z2, sans qu'un mouvement ne soit détecté en zone Z1 | Transmettre l'information de panne des moyens de détection en zone Z1 sur sa fonction détection de mouvement |
| 10 (1010) | Oui | Non | Oui | Non | La personne est debout ou assise et immobile | Néant |
| 11 (1011) | Oui | Non | Oui | Oui | La personne est détectée présente en zone Z1 et en mouvement en zone Z2, sans qu'un mouvement ne soit détecté en zone Z1 | Transmettre l'information de panne des moyens de détection en zone Z1 sur sa fonction détection de mouvement |
| 12 (1100) | Oui | Oui | Non | Non | La personne est donc allongée ou baissée. Elle est en mouvement. | Enregistrement éventuel de la date et heure du début de cette situation. Augmentation éventuelle de la fréquence d'observation. |
| 13 (1101) | Oui | Oui | Non | Oui | La personne est détectée en mouvement en zone Z1 et en zone Z2 | néant |
| 14 (1110) | Oui | Oui | Oui | Non | La personne est debout ou assise et agite exclusiveme nt ses membres inférieurs | Néant |
| 15 (1111) | Oui | Oui | Oui | Oui | La personne est présente (debout ou assise) et en mouvement | Néant |

Concernant les cas n°1, 4, 5, 6, 7, 9 et 13, on peut noter qu'il est possible que le mouvement d'une personne soit détecté dans une zone Zi, sans que la présence de cette personne ne soit détectée dans cette même zone Zi. Ce cas correspond au fait que la moyenne temporelle sur l'amplitude, ou sur l'amplitude et la phase des signaux créés par le mouvement peut occasionnellement être égale respectivement à l'amplitude, ou l'amplitude et la phase de l'écho de référence et donc ne pas déclencher une détection de présence proprement dite. Dans ce cas, on choisit de conclure à une présence et à un mouvement en zone Zi.

Les cas suivants correspondent aux cas d'intérêt :
- Cas n°0 : la personne est absente du local, ce cas permet de déclencher éventuellement une mesure des échos de référence des zones Z1 et Z2.
- Cas n°10, 14, 15 : la personne est présente, mobile ou immobile dans la partie supérieure du local. Ces cas correspondent à une situation de sécurité pour la personne.
- Cas n°8 : la personne est immobile dans la partie inférieure du local. Ce cas nécessite le déclenchement d'une pré-alerte au bout de quelques minutes, 1 à 5 minutes par exemple, pour éviter un déclenchement inutile dans le cas où la personne parvient à se relever d'elle-même.
- Cas n°4 et 12 : la personne est au sol mais en mouvement. Si la vitesse de variation du signal collecté est rapide, il peut s'agir d'une personne effectuant par exemple des mouvements de gymnastique au sol. Aucune alerte ne sera alors déclenchée tant que les mouvements de la personne au sol seront assez rapides.

L'installation de détection selon l'invention permet donc d'obtenir un grand raffinement des différentes situations identifiables.

En outre, grâce à l'utilisation de zones d'observation partiellement recouvrantes (i.e. non disjointes) ainsi qu'au recoupement possible entre les informations de présence/absence et de mouvement/immobilité recueillies en chacune d'elles, l'installation de détection selon l'invention dispose avantageusement d'une fonction d'autodiagnostic, permettant l'identification et le traitement des pannes et dysfonctionnements.

Ainsi, les cas n° 1 à 3, 9 et 11 correspondent typiquement à de tels événements, car le recoupement entre les informations recueillies pour chaque zone Z1 et Z2 correspond à une impossibilité physique. Par exemple, pour les cas 1 à 3, une présence et/ou un mouvement est détecté en zone Z2, tandis qu'aucune présence ni mouvement n'est détectée en zone Z1, indiquant donc manifestement un dysfonctionnement.

Ce traitement complet allant jusqu'à l'identification de situations de pannes ou de dysfonctionnement permet ainsi de limiter considérablement le déclenchement de fausses alarmes, qui compromettent sinon l'intérêt et l'efficacité de telles installations.

Une autre application d'une autre installation ne faisant pas partie de l'invention va maintenant être décrite dans le cadre de la prévention et de la sécurité passive dans l'industrie automobile.

Cette autre application spécifique concerne une gestion d'un dispositif de sécurité tels qu'un coussin gonflable de sécurité, ou plus communément appelé airbag, dans un habitacle d'un véhicule automobile.

Un véhicule automobile comprend habituellement un siège conducteur et un siège passager avant. Il comprend également au moins un airbag prévu pour chaque siège afin de protéger les usagers du véhicule lors d'une collision et ainsi leur éviter de percuter violemment certains équipements du véhicule.

On s'intéresse plus particulièrement aux airbags frontaux. Ils se logent en différents endroits du véhicule suivant l'utilisation, par exemple sur un volant pour le conducteur et dans un tableau de bord pour le passager avant.

Un déclenchement de l'airbag frontal lors d'un choc peut provoquer des lésions ou des traumatismes, voire la mort, en particulier si l'usager est dans une position inhabituelle, par exemple ayant sa tête baissée pour ramasser un objet tombé au sol ou dans le cas où le conducteur est très proche du volant.

Il est donc particulièrement crucial de pouvoir détecter la position nominale de la tête de l'usager préalablement au déclenchement de l'airbag. Le but est de s'assurer que la tête de l'usager est dans une position autorisant le déclenchement de l'airbag sans danger pour l'usager, avant de déclencher effectivement l'airbag. Cette détection devra être réalisée avec une périodicité de préférence de l'ordre de la seconde.

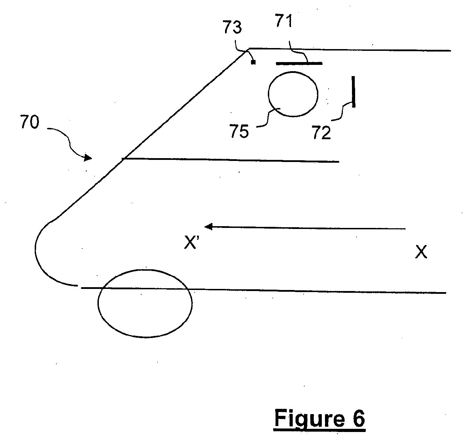

Un exemple de cette application est illustré sur la figure 6 dans laquelle un véhicule automobile 70 est représenté schématiquement en vue de côté.

Cette application nécessite de définir trois zones d'observation non disjointes.

Ainsi, une première zone d'observation, dite zone 1, du local délimité, constitué par l'habitacle du véhicule automobile, comprend un volume situé entre deux plans verticaux perpendiculaires à une direction XX' symbolisant le sens d'avancement du véhicule par rapport à la route.

Un dispositif d'émission/réception, associé à cette première zone d'observation, comprend une première paire d'antennes 71 permettant de surveiller le volume particulier constitué par cette première zone d'observation. La paire d'antennes pourra être constituée soit d'une paire de câbles coaxiaux à fente, soit d'une paire d'antennes de type guide à fente, soit d'une paire d'antennes filaires. Ces types d'antennes sont prévus pour rayonner dans leur proximité immédiate (quelques longueurs d'antenne) un champ limité spatialement à leur longueur physique dans tous les plans contenant leur axe. Elles sont en outre prévues pour être munies d'écrans latéraux permettant de limiter leur rayonnement dans un plan perpendiculaire à leur axe. Selon l'exemple de réalisation de la figure 6, la première paire d'antennes 71 pourra avantageusement être positionnée dans le toit du véhicule 70 horizontalement et parallèlement à l'axe XX' pour surveiller le volume constitué par la première zone d'observation.

Une deuxième zone d'observation prédéterminée du local délimité constitué par l'habitacle du véhicule automobile, dite zone 2, comprend un volume situé entre deux plans horizontaux parallèles à la direction XX'.

Un dispositif d'émission/réception, associé à cette deuxième zone d'observation, comprend une deuxième paire d'antennes 72, permettant de surveiller le volume particulier constitué par cette deuxième zone d'observation. La deuxième paire d'antennes 72 présente exactement les mêmes caractéristiques que celles précitées en référence à la première paire et pourra avantageusement être positionnée par exemple dans un montant latéral en arrière d'une porte avant perpendiculairement à l'axe XX'.

Enfin, une troisième zone d'observation prédéterminée du local délimité constitué par l'habitacle du véhicule automobile, dite zone 3, comprend un volume situé entre deux plans verticaux parallèles à la direction XX'.

Un dispositif d'émission/réception, associé à cette troisième zone d'observation, comprend une troisième paire d'antennes 73, présentant également les caractéristiques précitées et permettant de surveiller le volume particulier constitué par cette troisième zone d'observation. Cette troisième paire d'antennes pourra par exemple être positionnée au niveau de la jonction entre le pare-brise et le toit du véhicule transversalement à la direction XX'.

Chaque paire d'antennes surveille donc une zone d'observation qui lui est propre, définie par un volume particulier de l'habitacle du véhicule.

La tête 75 de l'usager doit être localisée dans ces trois zones d'observation simultanément, pour autoriser le déclenchement de l'airbag en cas de besoin, sinon l'airbag n'est pas déclenchée.

Dans cette application particulière, la mesure de l'écho de référence en chaque zone sera réalisée, soit lors de l'opération de déverrouillage des portes du véhicule, avant que le conducteur ne pénètre dans le véhicule, soit périodiquement, durant la période de non utilisation du véhicule.

De la même manière que pour le précédent exemple d'application, chaque dispositif d'émission/réception est prévu pour mesurer, à intervalles réguliers, l'amplitude, ou la phase, ou bien l'amplitude et la phase du signal réfléchi en provenance de la zone d'observation associée, formant ainsi l'écho instantané.

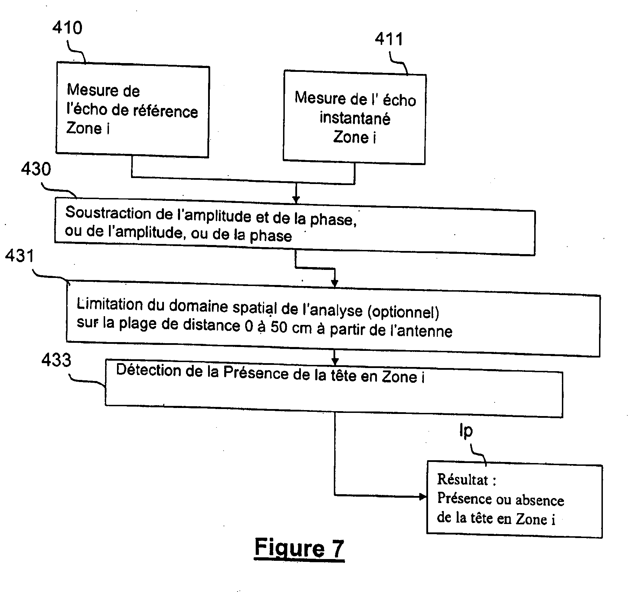

La figure 7 illustre alors les principales étapes de traitement effectuées par le calculateur sur les données recueillies par chaque dispositif d'émission/réception associé à chaque zone d'observation i. Les mêmes étapes que celles déjà décrites en référence à la figure 4 sont mises en oeuvre, à la seule différence que, selon cette application, les moyens de détection intégrés au véhicule automobile sont adaptés pour recueillir uniquement une information Ip de présence/absence de la tête en chacune des trois zones d'observation considérées, l'information de mouvement n'étant pas nécessaire.

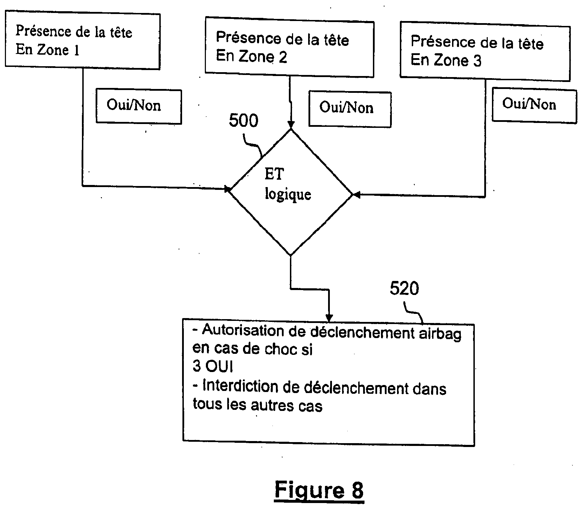

Les informations de présence/absence de la tête recueillies en chacune des trois zones d'observations sont alors soumises aux moyens de traitement 50 pour être fusionnées dans une étape 500, mettant en oeuvre l'opération ET logique telle qu'illustrée à la figure 8, en vue d'autoriser ou interdire le déclenchement de l'airbag.

Ainsi, une étape d'analyse 520 de la fusion de ces informations conduit autoriser le déclenchement de l'airbag uniquement si le signal résultant de la fusion des informations de présence de la tête en chacune des zones répond à la règle suivante :
- Présence en zone 1
- ET Présence en zone 2
- ET Présence en zone 3.

Dans tous les autres cas de figure, le déclenchement de l'airbag est prohibé.

Enfin, l'installation de détection peut s'appliquer, selon un autre exemple ne faisant pas partie de l'invention, à la localisation et à la trajectographie de personnes dans un local.

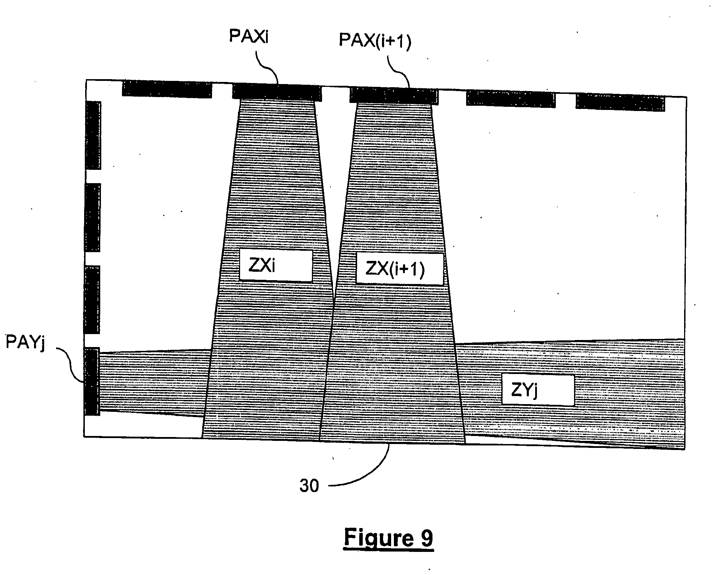

Dans cette application décrite en référence à la figure 9, illustrant un local en vue de dessus, des zones d'observation, respectivement ZYj et ZXi, sont réparties en des premières et secondes séries transversales de volumes successifs du local, chacun des volumes de la première et seconde série de volumes étant délimité par des murs du local et situé entre deux plans sensiblement verticaux.

Autrement dit, les différentes zones d'observation ZYj de la première série forment des « tranches » verticales successives du volume du local et les différentes zones d'observation ZXi de la deuxième série forment également des « tranches » verticales successives du volume du local, mais transversales par rapport aux tranches ZYj. De cette manière, l'ensemble du volume du local peut être surveillé.

Pour ce faire, à chaque zone d'observation ainsi définie, respectivement ZYj, ZXi, est associé un dispositif d'émission/réception comprenant une paire d'antennes, respectivement PAYj, PAXi, permettant de surveiller le volume particulier constitué par la zone d'observation considérée. Chaque paire d'antennes pourra alors être du même type que celui déjà décrit en référence à l'application précitée de détection de la position nominale de la tête d'un conducteur avant déclenchement d'un airbag, et sera disposée le long de deux des quatre murs du local, comme illustré à la figure 9, de manière à couvrir toute la surface du local, le diagramme de rayonnement entre deux paires d'antennes voisines, par exemple PAXi et PAX(i+1) pouvant se recouvrir partiellement.

Dans cette application particulière, la mesure des échos de référence des zones ZYj et ZXi sera réalisée tout d'abord à la mise en route de l'installation, lors d'une phase d'initialisation exécutée en l'absence de la personne à suivre (ou objet), ou encore lors de périodes de déplacement de la personne en mettant en oeuvre les principes déjà expliqués précédemment.

De la même manière que pour le précédent exemple d'application, chaque dispositif d'émission/réception est prévu pour mesurer, à intervalles réguliers, l'amplitude, ou la phase, ou bien l'amplitude et la phase du signal réfléchi en provenance de la zone d'observation associée, formant ainsi l'écho instantané.

Les étapes de traitement effectuées par le calculateur sur les données recueillies par chaque dispositif d'émission/réception associé à chaque zone d'observation ZYi et ZXi sont identiques à celles déjà décrites en référence à la figure 4, de sorte qu'on recueille pour chacune des zones d'observation une information de présence ainsi qu'une information de mouvement de la personne dans la zone.

Ces informations en chacune des zones d'observations sont alors soumises aux moyens de traitement pour être fusionnées. Les traitements effectués pourront alors permettre, par recoupement des informations issues des zones d'observation, de localiser précisément une personne à l'intérieur du local. A titre d'exemple, on pourra par exemple localiser une personne se trouvant à l'intersection d'une zone d'observation ZYj et d'une zone d'observation ZXi. Selon les opérations logiques réalisées sur les informations de présence et de mouvement recueillies en chacune des zones d'observation, on pourra encore affiner l'analyse, jusqu'à, par exemple, compter le nombre de personnes présentes dans le local, ou encore suivre la trajectoire d'une ou plusieurs personnes dans le local, avec reconstitution partielle de leur activité en utilisant la connaissance de la destination et de l'aménagement du local.

## Revendications

1. Installation (10) de détection de la position d'une entité (20), mobile ou immobile, dans un espace délimité (30), comprenant :
- des moyens (40) de détection de présence de ladite entité dans au moins deux zones d'observation (Z1, Z2) dudit espace se recouvrant au moins partiellement, lesdits moyens étant adaptés pour recueillir au moins une information de présence (Ip) de cette entité indépendamment de son mouvement, et une information de mouvement (Im) de ladite entité, en chacune des dites zones d'observation,
- des moyens de traitement (50), adaptés à fusionner par l'intermédiaire d'opérations logiques les informations de présence (Ip) et de mouvement (Im) de ladite entité recueillies pour chacune des dites zones d'observation,
- des moyens de décision (60), reliés aux moyens de traitement et adaptés pour commander une action en fonction d'un signal logique produit par les moyens de traitement, lesdits moyens de détection de présence comprennent :
- un dispositif d'émission/réception de signaux (41), propre à chaque zone d'observation, comprenant au moins un élément d'émission pour émettre des signaux dans la zone d'observation associée et au moins un élément de réception pour collecter un écho instantané constitué des signaux réfléchis en provenance de ladite zone d'observation,
- des moyens de stockage (42) d'un écho de référence pour chaque zone d'observation, représentatif de signaux réfléchis en provenance de chacune des dites zones en l'absence de ladite entité,
- des moyens de comparaison (43) dudit écho instantané et dudit écho de référence pour chaque zone d'observation, adaptés à mesurer des variations en amplitude et en phase entre lesdits échos, de sorte à produire lesdites informations de présence et de mouvement de ladite entité en ladite zone d'observation,
ladite installation étant **caractérisée en ce que**
le dispositif d'émission/réception comprend un circuit émetteur/récepteur radiofréquence comprenant un générateur de signaux radiofréquence couplé à au moins un système antennaire formant l'élément d'émission pour émettre les signaux et au moins un capteur radiofréquence formant l'élément de réception connecté à un convertisseur analogique numérique par l'intermédiaire d'un amplificateur et d'un filtre basse fréquence, et **en ce que**
la première zone d'observation (Z1) correspond au volume total dudit espace et **en ce que** la seconde zone d'observation (Z2) est comprise dans un volume dudit espace, délimité par des murs dudit espace et situé entre deux plans sensiblement horizontaux, de sorte que la seconde zone d'observation (Z2) recouvre partiellement la première zone d'observation (Z1).

2. Installation selon la revendication 1, **caractérisée en ce que** les moyens de comparaison sont adaptés à réaliser une opération de soustraction entre l'amplitude et la phase desdits échos.

3. Installation selon la revendication 2, **caractérisée en ce que** lesdits plans sensiblement horizontaux sont disposés respectivement à environ 0,8 m et 1,5 m du sol dudit espace.

4. Application d'une installation de détection selon les revendications 1 à 3 à l'identification de situation d'urgence dans un local formant ledit espace pour le suivi de personne à domicile.

5. Procédé de détection d'une entité (20) mobile ou immobile dans un espace délimité (30), **caractérisée en ce qu'**il comprend les étapes suivantes consistant à :
- détecter (432, 433) la présence de ladite entité dans au moins deux zones d'observation (Z1, Z2) dudit espace se recouvrant au moins partiellement, de manière à recueillir au moins une information de présence (Ip) de ladite entité indépendamment de son mouvement, et une information de mouvement (Im) de ladite entité, en chacune des dites zones d'observation ;
- fusionner (500) par l'intermédiaire d'opérations logiques les informations de présence (Ip) et de mouvement (Im) de ladite entité recueillies pour chacune des dites zones d'observation, de manière à produire un signal logique de résultat;
- analyser (510) ledit signal logique de manière à commander une action en fonction dudit résultat,
l'étape de détection de présence comprenant en outre pour chaque zone d'observation considérée :
- la mesure (410) et le stockage d'un écho de référence, représentatif de signaux réfléchis dans ladite zone en l'absence de ladite entité ;
- la mesure (411) d'un écho instantané, constitué des signaux réfléchis en provenance de ladite zone d'observation ;
- la comparaison (430) entre l'écho instantané et l'écho de référence pour ladite zone, consistant à mesurer des variations en amplitude et en phase entre lesdits échos de manière à produire ladite information de présence et de mouvement de ladite entité en ladite zone d'observation **caractérisé en ce que** les signaux réfléchis sont des signaux radiofréquence émis par un générateur de signaux radiofréquence couplé à au moins un système antennaire et **en ce que** la première zone d'observation (Z1) correspond au volume total dudit espace et **en ce que** la seconde zone d'observation (Z2) est comprise dans un volume dudit espace, délimité par des murs dudit espace et situé entre deux plans sensiblement horizontaux, de sorte que la seconde zone d'observation (Z2) recouvre partiellement la première zone d'observation (Z1).

6. Procédé selon la revendication 5, **caractérisé en ce que** l'étape de comparaison (430) entre l'écho instantané et l'écho de référence s'effectue par une soustraction entre l'amplitude et la phase desdits échos.

7. Procédé selon l'une quelconque des revendications 5 à 6, **caractérisé en ce que** la mesure (410) de l'écho de référence représentatif des signaux réfléchis dans ladite zone en l'absence de ladite entité, est réalisée lorsque l'espace est vide.

8. Procédé selon l'une quelconque des revendications 5 à 7, **caractérisé en ce que** la mesure (410) de l'écho de référence représentatif des signaux réfléchis dans ladite zone en l'absence de ladite entité, résulte d'un traitement appliqué à une pluralité d'échos instantanés collectés en présence de ladite entité mobile dans ledit espace.

## Patentansprüche

1. Anlage (10) zum Erfassen der Position einer beweglichen oder unbeweglichen Entität (20) in einem begrenzten Raum (30), umfassend:
- Mittel (40) zum Erfassen der Anwesenheit der Entität in mindestens zwei Beobachtungszonen (Z1, Z2) des Raums, die sich mindestens teilweise überlappen, wobei die Mittel geeignet sind, um mindestens eine Anwesenheitsinformation (Ip) von dieser Entität unabhängig von ihrer Bewegung und eine Bewegungsinformation (Im) der Entität in jeder der Beobachtungszonen zu sammeln,
- Verarbeitungsmittel (50), die geeignet sind, über logische Operationen die Anwesenheitsinformation (Ip) und die Bewegungsinformation (Im) der Entität, die für jede der Beobachtungszonen gesammelt sind, zu verschmelzen,
- Entscheidungsmittel (60), die mit den Verarbeitungsmitteln verbunden sind und geeignet sind, eine Aktion in Abhängigkeit von einem logischen Signal, das durch die Verarbeitungsmittel erzeugt ist, zu steuern,
wobei die Mittel zum Erfassen der Anwesenheit aufweisen:
- eine Vorrichtung zum Senden/Empfangen von Signalen (41), die für jede Beobachtungszone eigen ist, die mindestens ein Sendeelement zum Senden von Signalen in der zugehörigen Beobachtungszone und mindestens ein Empfangselement aufweist, um ein unmittelbares Echo zu erfassen, das durch die reflektierten Signale gebildet ist, die von der Beobachtungszone kommen,
- Mittel zum Speichern (42) eines Referenzechos für jede Beobachtungszone, das für die reflektierten Signale, die von jeder der Zonen in Abwesenheit der Entität kommen, repräsentativ ist,
- Mittel zum Vergleichen (43) des unmittelbaren Echos und des Referenzechos für jede Beobachtungszone, die geeignet sind, die Amplituden- und Phasenschwankungen zwischen den Echos derart zu messen, um die Anwesenheits- und Bewegungsinformationen der Entität in der Beobachtungszone zu erzeugen,
wobei die Anlage **dadurch gekennzeichnet ist, dass**
die Vorrichtung zum Senden/Empfangen eine Hochfrequenz-Sende-/Empfangsschaltung aufweist, umfassend einen Hochfrequenzsignalgenerator, der mit mindestens einem Antennensystem verbunden ist, das das Sendeelement zum Senden der Signale bildet, und mindestens einen Hochfrequenzsensor, der das Empfangselement bildet, das über einen Verstärker und einen Niederfrequenzfilter mit einem Analog-Digital-Wandler verbunden ist, und dadurch, dass
die erste Beobachtungszone (Z1) dem Gesamtvolumen des Raumes entspricht und dass die zweite Beobachtungszone (Z2) in einem Volumen des Raums enthalten ist, das durch Wände des Raums begrenzt ist und sich zwischen zwei im Wesentlichen horizontalen Ebenen befindet, derart, dass die zweite Beobachtungszone (Z2) die erste Beobachtungszone (Z1) teilweise bedeckt.

2. Anlage nach Anspruch 1, **dadurch gekennzeichnet, dass** die Mittel zum Vergleichen geeignet sind, eine Subtraktionsoperation zwischen der Amplitude und der Phase der Echos durchzuführen.

3. Anlage nach Anspruch 2, **dadurch gekennzeichnet, dass** die im Wesentlichen horizontalen Ebenen jeweils etwa 0,8 m und 1,5 m vom Boden des Raumes angeordnet sind.

4. Anwendung einer Anlage zum Erfassen nach den Ansprüchen 1 bis 3 zum Erkennen einer Notfallsituation in einer Räumlichkeit, die den Raum für die Personenbetreuung zu Hause bildet.

5. Verfahren zum Erfassen einer beweglichen oder unbeweglichen Entität (20) in einem begrenzten Raum (30), **dadurch gekennzeichnet, dass** es die folgenden Schritte aufweist, die darin bestehen:
- die Anwesenheit der Entität in mindestens zwei Beobachtungszonen (Z1, Z2) des Raums zu erfassen (432, 433), die sich mindestens teilweise überlappen, derart, um mindestens eine Anwesenheitsinformation (Ip) der Entität unabhängig von ihrer Bewegung und eine Bewegungsinformation (Im) der Entität in jeder der Beobachtungszonen zu sammeln;
- über logische Operationen die Anwesenheitsinformation (Ip) und die Bewegungsinformation (Im) der Entität, die für jede der Beobachtungszonen gesammelt sind, derart zu verschmelzen (500), um ein logisches Ergebnissignal erzeugen;
- das logische Signal derart zu analysieren (510), um eine Aktion in Abhängigkeit von dem Ergebnis zu steuern,
wobei der Schritt des Erfassens der Anwesenheit ferner für jede betreffende Beobachtungszone aufweist:
- das Messen (410) und das Speichern eines Referenzechos, das für reflektierte Signale in der Zone in Abwesenheit der Entität repräsentativ ist;
- das Messen (411) eines unmittelbaren Echos, das aus den reflektierten Signalen gebildet ist, die von der Beobachtungszone kommen;
- das Vergleichen (430) des unmittelbaren Echos mit dem Referenzecho für jede Zone, das darin besteht, Amplituden- und Phasenschwankungen zwischen den Echos derart zu messen, um die Anwesenheits- und Bewegungsinformation der Entität in der Beobachtungszone zu erzeugen,
**dadurch gekennzeichnet, dass** die reflektierten Signale Hochfrequenzsignale sind, die von einem Hochfrequenzsignalgenerator gesendet werden, der mit mindestens einem Antennensystem verbunden ist, und dadurch, dass die erste Beobachtungszone (Z1) dem Gesamtvolumen des Raumes entspricht und dass die zweite Beobachtungszone (Z2) in einem Volumen des Raums enthalten ist, das durch Wände des Raums begrenzt ist und sich zwischen zwei im Wesentlichen horizontalen Ebenen befindet, derart, dass die zweite Beobachtungszone (Z2) die erste Beobachtungszone (Z1) teilweise bedeckt.

6. Verfahren nach Anspruch 5, **dadurch gekennzeichnet, dass** der Schritt zum Vergleichen (430) des unmittelbaren Echos mit dem Referenzecho durch eine Subtraktionsoperation zwischen der Amplitude und der Phase der Echos durchgeführt wird.

7. Verfahren nach einem der Ansprüche 5 bis 6, **dadurch gekennzeichnet, dass** das Messen (410) des Referenzechos, das für die reflektierten Signale in der Zone in Abwesenheit der Entität repräsentativ ist, durchgeführt wird, wenn der Raum leer ist.

8. Verfahren nach einem der Ansprüche 5 bis 7, **dadurch gekennzeichnet, dass** das Messen (410) des Referenzechos, das für die reflektierten Signale in der Zone in Abwesenheit der Entität repräsentativ ist, aus einer Verarbeitung hervorgeht, die auf mehrere unmittelbare Echos angewendet wird, die in Anwesenheit der mobilen Entität in dem Raum gesammelt werden.

## Claims

1. Apparatus (10) for detecting the position of a mobile or immobile entity (20) in a bounded space (30), comprising:
- means (40) for detecting the presence of said entity in at least two at least partially overlapping observation zones (Z1, Z2) of said space, said means being suitable for gathering at least one piece of information (Ip) on the presence of this entity independently of its movement, and one piece of information (Im) on the movement of said entity, in each of said observation zones;
- processing means (50) that are suitable for fusing, by way of logic operations, the pieces of information (Ip, Im) on the presence and movement of said entity gathered for each of said observation zones; and
- deciding means (60) that are connected to the processing means and that are suitable for commanding an action depending on a logic signal produced by the processing means,
said presence-detecting means comprising:
- one signal emitting/receiving device (41) per observation zone, said device comprising at least one emitting element for emitting signals into the associated observation zone and at least one receiving element for collecting an instantaneous echo made up of reflected signals originating from said observation zone;
- means (42) for storing a reference echo for each observation zone, said reference echo being representative of reflected signals originating from each of said zones in the absence of said entity; and
- means (43) for comparing said instantaneous echo and said reference echo for each observation zone, said means being suitable for measuring amplitude and phase variations between said echoes so as to produce said pieces of information on the presence and movement of said entity in said observation zone,
said apparatus being **characterized in that**
the emitting/receiving device comprises a radiofrequency emitter/receiver circuit comprising a radiofrequency signal generator that is coupled to at least one antenna system that forms an emitting element for emitting the signals, and at least one radiofrequency sensor that forms the receiving element that is connected to an analogue-digital converter by way of an amplifier and a low-frequency filter, and **in that**
the first observation zone (Z1) corresponds to the total volume of said space and **in that** the second observation zone (Z2) is comprised in a volume of said space, which is bounded by walls of said space and located between two substantially horizontal planes, so that the second observation zone (Z2) partially overlaps the first observation zone (Z1).

2. Apparatus according to Claim 1, **characterized in that** the comparing means are suitable for carrying out an operation of subtraction between the amplitude and phase of said echoes.

3. Apparatus according to Claim 2, **characterized in that** said substantially horizontal planes are placed at about 0.8 m and 1.5 m from the ground of said space, respectively.

4. Use of a detecting apparatus according to Claims 1 to 3 to identify an emergency situation in a premises forming said space, in the context of an application to the tracking of one or more people at home.

5. Method for detecting a mobile or immobile entity (20) in a bounded space (30), **characterized in that** it comprises the following steps consisting in:
- detecting (432, 433) the presence of said entity in at least two at least partially overlapping observation zones (Z1, Z2) of said space, so as to gather at least one piece of information (Ip) on the presence of said entity independently of its movement, and one piece of information (Im) on the movement of said entity, in each of said observation zones;
- fusing (500), by way of logic operations, the pieces of information (Ip, Im) on the presence and movement of said entity gathered for each of said observation zones, so as to produce a result logic signal; and
- analysing (510) said logic signal so as to command an action depending on said result,
the presence-detecting step furthermore comprising, for each observation zone in question:
- measuring (410) and storing a reference echo that is representative of signals reflected from said zone in the absence of said entity;
- measuring (411) an instantaneous echo made up of reflected signals originating from said observation zone;
- comparing (430) the instantaneous echo and the reference echo for said zone, this consisting in measuring amplitude and phase variations between said echoes so as to produce said pieces of information on the presence and movement of said entity in said observation zone,
**characterized in that** the reflected signals are radiofrequency signals emitted by a radiofrequency signal generator that is coupled to at least one antenna system and **in that** the first observation zone (Z1) corresponds to the total volume of said space and **in that** the second observation zone (Z2) is comprised in a volume of said space, which is bounded by walls of said space and located between two substantially horizontal planes, so that the second observation zone (Z2) partially overlaps the first observation zone (Z1).

6. Method according to Claim 5, **characterized in that** the step (430) of comparing the instantaneous echo and the reference echo is carried out via a subtraction between the amplitude and phase of said echoes.

7. Method according to either one of Claims 5 and 6, **characterized in that** the measurement (410) of the reference echo that is representative of the signals reflected from said zone in the absence of said entity is carried out when the space is empty.

8. Method according to any one of Claims 5 to 7, **characterized in that** the measurement (410) of the reference echo that is representative of the signals reflected from said zone in the absence of said entity results from processing applied to a plurality of instantaneous echoes collected in the presence of said mobile entity in said space.
